# EUROPEAN PATENT SPECIFICATION

(11) **EP 4 092 522 B1**
(45) Date of publication and mention of the grant of the patent: **24.12.2025**
(21) Application number: 22171760.6
(22) Date of filing: 05.05.2022
(51) Int. Cl.: G06F 7/58

(54) **SEMICONDUCTOR DEVICE AND METHOD FOR VERIFYING RANDOM NUMBER DATA**
HALBLEITERBAUELEMENT UND VERFAHREN ZUR VERIFIZIERUNG VON ZUFALLSZAHLDATEN
DISPOSITIF SEMI-CONDUCTEUR ET PROCÉDÉ DE VÉRIFICATION DE DONNÉES DE NOMBRES ALÉATOIRES

(30) Priority: 19.05.2021 JP 2021084585
(43) Date of publication of application: 23.11.2022
(73) Proprietor: Renesas Electronics Corporation, Tokyo 135-0061 (JP)
(72) Inventor: FUKUSHIMA, Kazuhiko, Tokyo, 135-0061 (JP); ASAMI, Kazuo, Tokyo, 135-0061 (JP)
(74) Representative: Betten & Resch

(56) References cited:
- US-A1- 2010 106 757
- NATIONAL INSTITUTE OF STANDARDS AND TECHNOLOGY: "Security requirements for cryptographic modules NIST FIPS 140-2", 25 May 2001 (2001-05-25), pages 1 - 69, XP061049215, Retrieved from the Internet <URL:https://nvlpubs.nist.gov/nistpubs/FIPS/NIST.FIPS.140-2.pdf> [retrieved on 20010525], DOI: 10.6028/NIST.FIPS.140-2
- BASSHAM L E ET AL: "A statistical test suite for random and pseudorandom number generators for cryptographic applications NIST SP 800-22r1a", 31 December 2010 (2010-12-31), pages 1 - 131, XP061057784, Retrieved from the Internet <URL:https://nvlpubs.nist.gov/nistpubs/Legacy/SP/nistspecialpublication800-22r1a.pdf> [retrieved on 20101231], DOI: 10.6028/NIST.SP.800-22R1A
- "Handbook of Applied Cryptography", 1 January 1996, CRC PRESS, BOCA RATON, FL, US, ISBN: 978-0-8493-8523-0, article MENEZES ALFRED J ET AL: "Handbook of Applied Cryptography - Section 5.4 Statistical tests", pages: 175 - 185, XP055969036, 022821
- TORII NAOYA ET AL: "ASIC implementation of random number generators using SR latches and its evaluation", EURASIP JOURNAL ON INFORMATION SECURITY TORII ET AL. EURASIP JOURNAL ON INFORMATION SECURITY, 1 January 2016 (2016-01-01), pages 10, XP055968124, Retrieved from the Internet <URL:https://d-nb.info/1100422455/34> DOI: 10.1186/s13635-016-0036-1

## Description

### BACKGROUND

The present invention relates to a semiconductor device for verifying random number data.

Patent Document 1 discloses a first random number generator for generating a bit string using a current change due to thermal noise of a semiconductor device and a second random number generator provided in a subsequent stage for generating a random number using a shift register with a feedback path. The first random number generator generates a bit string by generating a first clock signal using an oscillator for changing oscillation frequency based on the current change and latching the first clock signal by a second clock signal of lower frequency than the first clock signal.

There are disclosed techniques listed below.
[Patent Document 1] Japanese Unexamined Patent Application Publication No. 2005-44090

### SUMMARY

Random numbers are necessary elements for cryptography and are widely used, for example, in key generation and authentication. In order to improve the confidentiality and integrity of data, the reliability of authentication, and the like, it is required to improve the randomness of random number data. As such a random number generator, for example, as shown in Patent Document 1, a method of generating an intrinsic random number based on a physical random factor is known. On the other hand, even when such a random number generator is used, the randomness may be lowered by an attack from the outside. Therefore, it is recommended that the random number generator is equipped with a function called a health test for detecting that the randomness of the generated random number data has deteriorated.

For example, "NIST (National Institute of Standards and Technology) SP800-90B" refers to "Repetition Count Test" (abbreviated as RCT in the specification) and "Adaptive Proportion Test" (abbreviated as APT in the specification) as health tests. The RCT is a test for confirming that the same value is not output continuously for more than or equal to a prescribed number of times. The APT is a test that counts the number of "1" or "0" at the default bit length and confirms that the count value does not exceed the threshold value.

Here, for example, since data such as 1010... is periodic data, it is not originally judged to be a random number. However, when using the normal judgement method, the RCT is judged to be less than or equal to the specified number since the data continuous number is 1, the APT occurrence probability of 1 is judged that the occurrence probability is within the specified because it is 50%. As described above, in the case of using a normal judgement method in RCT and APT, even if random number data having low randomness is originally judged to have a pass, that is, randomness, there is a fear that the randomness cannot be verified with high accuracy. The problems are solved by the features of the independent claim.

According to the claimed configuration, it is possible to prevent erroneous judgement of the periodic data as a random number and it is possible to verify the randomness of the random number data with high accuracy.

### BRIEF DESCRIPTIONS OF THE DRAWINGS

FIG. 1 is a schematic diagram showing a configuration example of a semiconductor device according to a first embodiment of the present invention.
FIG. 2A is a circuit block diagram showing a configuration example of a random number generator in FIG 1.
FIG. 2B is a circuit diagram showing a configuration of a ring oscillator in FIG 2A.
FIG. 3 is a circuit block diagram showing a configuration example of a health test circuit in FIG. 1.
FIG. 4 is a flowchart showing an exemplary process content of a main part of the health test circuit in FIG. 1 when the health test circuit is set to "Repetition Count Test (RCT)".
FIG. 5 is a flowchart showing an exemplary process content of a main part of the health test circuit in FIG. 1 when the health test circuit is set to "Adaptive Proportion Test".
FIG. 6 is a circuit diagram showing a configuration example of the random number generator in FIG. 1 in a semiconductor device according to a second embodiment of the present invention.
FIG. 7A is a diagram illustrating an operation principle of the random number generator in FIG. 6.
FIG. 7B is a diagram illustrating the operation principle of the random number generator in FIG 6.
FIG. 8 is a circuit block diagram showing a configuration example of the health test circuit in FIG. 1 in the semiconductor device according to the second embodiment of the present invention.

### DETAILED DESCRIPTION

If necessary for convenience in the following embodiments, they will be divided into sections or embodiments, but unless otherwise specified, they will not be irrelevant to each other, one of which will be subject to modifications, details, supplementary explanations, or the like of some or all of the other. In the following embodiments, the number of elements or the like (including the number, number, quantity, range, and the like) is not limited to the specific number except the case where it is specified in particular or the case where it is obviously limited to the specific number in principle, and may be a specific number or more or less.

Furthermore, in the following embodiments, it is needless to say that the constituent elements (including element steps and the like) are not necessarily essential except in the case where they are specifically specified and the case where they are considered to be obviously essential in principle. Similarly, in the following embodiments, references to the shape, positional relationship, etc. of a component, etc. shall include substantially approximating or analogous to the shape, etc., unless otherwise specifically indicated and obviously not the case in principle. The same applies to the above numerical values and ranges.

The circuit elements constituting the respective functional blocks of the embodiment is not particularly limited, but is formed on a semiconductor substrate such as single-crystal silicon by an integrated circuit technique such as known CMOS (complementary MOS transistor).

Hereinafter, embodiments of the present invention will be described in detail with reference to the drawings. In all the drawings for explaining the embodiments, the same members are denoted by the same reference numerals in principle, and repetitive descriptions thereof are omitted.

### First Embodiment

### <Outline of Semiconductor Equipment>

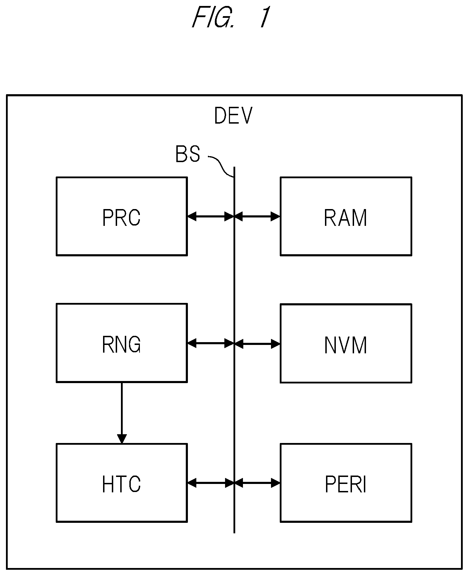

FIG. 1 is a schematic diagram showing a configuration example of a semiconductor device according to a first embodiment of the present invention. The semiconductor device DEV shown in FIG. 1 is typically a microcontroller, a SoC (system on a chip), or the like. The semiconductor device DEV includes a random number generator RNG and a health test circuit HTC in addition to a processor PRC, memories such as a RAM (Random Access Memory) and a nonvolatile memory NVM, and various peripheral circuits PERI. These components are connected to each other by a bus BS.

The processor PRC implements a predetermined function by executing a program stored in the memory. Various peripheral circuit PERI includes, for example, an analog-to-digital converter, a digital-to-analog converter, an external communication interface, and so forth. The random number generator RNG generates random number data which is serial data. The health test circuit HTC verifies randomness of random number data from the random number generator RNG. Specifically, the health test circuit HTC detects, for example, that the randomness of the random number data has decreased.

The semiconductor device according to the first embodiment may be, for example, a FPGA (Field Programmable Gate Array), an ASIC (Application Specific Integrated Circuit), or the like in addition to a microcontroller or the like. The health test circuit HTC is not limited to a hardware circuit and may be implemented by program processing by the processor PRC, although the details will be described later.

### <Details of the Random Number Generator>

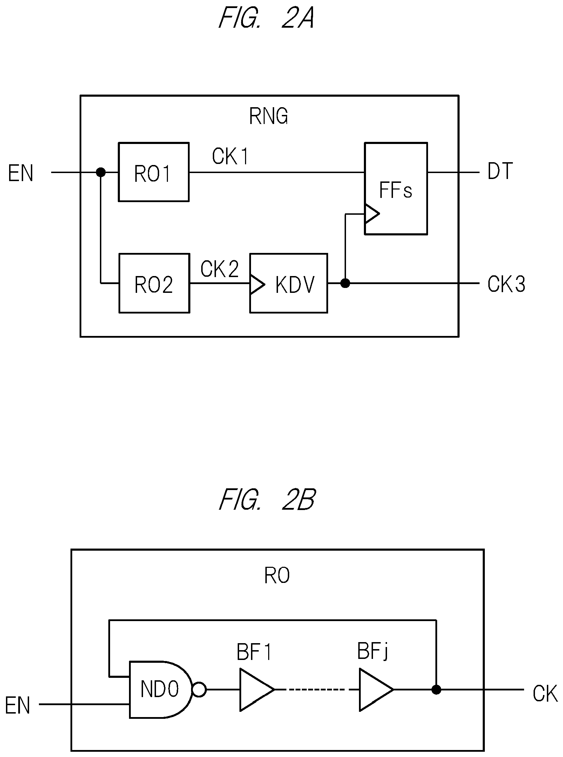

FIG. 2A is a circuit block diagram showing a configuration example of a random number generator in FIG 1. FIG. 2B is a circuit diagram illustrating an exemplary configuration of a ring oscillator in FIG. 2A. A random number generator RNG shown in FIG. 2A includes ring oscillators RO1, RO2, a divider KDV, and a flip-flop FFs. The ring oscillators RO1, RO2 respectively generate clock signals CK1, CK2 by performing an oscillation operation while the enable signal EN is at an assert level.

The divider KDV generates a clock signal CK3 of lower frequency than the clock signal CK2 by dividing a period of the clock signal CK2 from the ring oscillator RO2 to K (K > 1) times. The flip-flops FFs generates random number data DT, which is serial data, by sampling the clock signal CK1 from the ring oscillator RO1 at the edge of the clock signal CK3 from the divider KDV.

The ring oscillator RO in FIG. 2B corresponds to each of the ring oscillators RO1, RO2 in FIG. 2A. The ring oscillator RO includes a NAND gate ND0 and a plurality of stages (j stages) of buffered BF1 to BFj which are sequentially connected to subsequent stages. The NAND gate ND0, an enable signal EN, and a clock signal CK fed back from the buffer BFj of the final stage is input.

Each of the buffers BF1 to BFj is composed of, for example, an even-numbered CMOS (Complementary Metal Oxide Semiconductor) inverter-circuit or the like. The NAND gate ND0 functions as an inverter-circuit while the enable signal EN is at the assert level ("1" level). Thus, the ring oscillator RO performs oscillation operation by the inverter circuit of the odd-numbered stage, and outputs a clock signal CK from the buffer BFj of the final stage.

The random number generator RNG shown in FIG. 2A mainly generates random number data DT by utilizing jitter components coming from thermal noise contained in the ring oscillator RO1. The random number generator RNG of such a circuit configuration is called ERO (Elementary Ring Oscillator) type. It should be noted that the random number generator RNG is not limited to the configuration shown in the FIG. 2A, and any random number generator RNG may be used as long as the random number generator RNG can generate random number data, preferably, random number data composed of intrinsic random numbers.

### <Problems to be Assumed>

A method of attacking a random number generator to reduce the randomness of the random number data DT has been known. For example, it has been known how to suppress the jitter components of the clock signal CK by giving a periodic electromagnetic wave from the outside to the ring oscillator RO of FIG. 2B. In the random number generator RNG of FIG. 2A, in particular, when the jitter components of the ring oscillator RO1 is suppressed, it is likely that the randomness of the random number data DT is reduced. As a result, safety of cryptographic functions, such as secrecy and authentication, may be degraded.

Therefore, the health test circuit HTC of FIG. 1 is required to verify the randomness of the random number data DT with high accuracy and reliably detect that the randomness has decreased. A health test circuit using a normal method verifies randomness by handling random number data in units of 1 bit at the time of RCT and APT. As a specific example, it is assumed that the random number data is "10101010..." in case A, and "001110001110..." in case B, and "01100110..." in case C.

In this case, the maximum consecutive number of the same data serving as the study index in the RCT is 1 in case A, 3 in case B, and 2 in case C. As a result, the case A, the case B, and the case C can be judged as a pass by the RCT because the maximum number of consecutive cases is small. In addition, the maximum occurrence probability of the same data serving as the test index in the APT is 50% in case A, case B, and case C. As a result, all the case A, the case B, and the case C are included in the range in which the maximum occurrence probability is about 50%, and therefore, the APT can be judged as a pass.

However, the random number data of the case A, the case B, and the case C are periodic data, and are originally data having low randomness. As described above, in the normal system, there is a fear that even data having low randomness is judged as a pass at the time of RCT and APT. That is, in the usual scheme, the randomness of the random number data DT could not be verified with high accuracy, and there has been a fear that it could not be reliably detected that the randomness decreased.

### <Details of the Health Test Circuit>

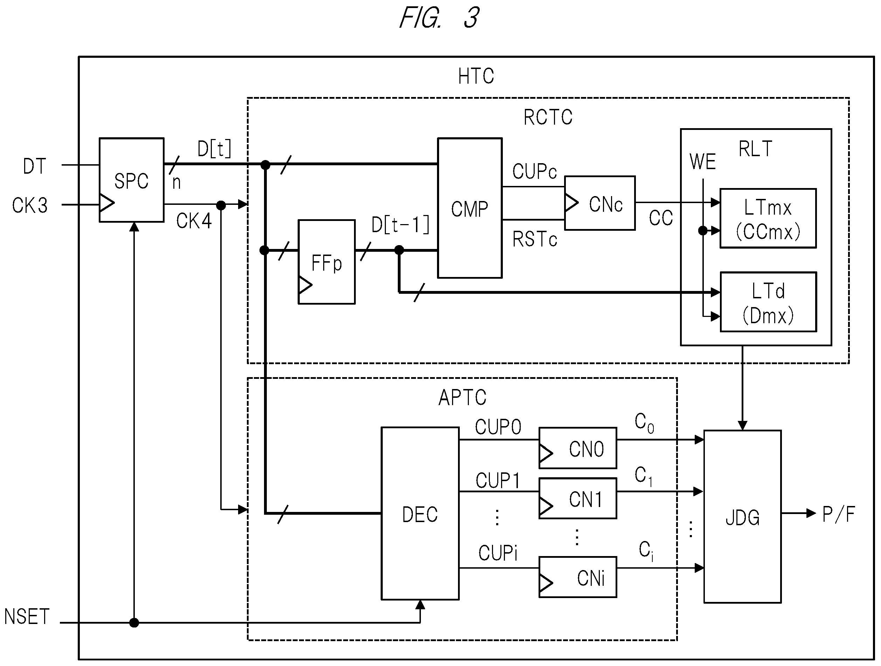

FIG. 3 is a circuit block diagram showing a configuration example of a health test circuit in FIG. 1. In general, the health test circuit HTC shown in FIG. 3 handles the random number data DT from the random number generator RNG as a data string of n-bit data by dividing the random number data DT by n bits (n is an integer larger than or equal to two), and verifies randomness based on the n-bit data. More specifically, the health test circuit HTC includes a serial-parallel converter SPC, an RCT circuit RCTC, an APT circuit APTC, and a result judgement circuit JDG.

The serial-parallel converter SPC fetches the random number data DT, which is serial data, in synchronization with the clock signal CK3, and divides the random number data DT into n (n is an integer equal to or greater than 2) bits, thereby outputting n-bit data D[t], which is parallel data. The serial-parallel converter SPC generates a clock signal CK4 synchronized with the output timing of the n-bit data D[t]. The value of the unit bit length "n" can be arbitrarily set by the bit length setting signal NSET.

The RCT circuit RCTC generally detects the number of consecutive random number data DT from the random number generator RNG when n-bit data D[t] of the same value are consecutively generated. More specifically, the RCT circuit RCTC includes a flip-flop FFp, a comparator CMP, a counter CNc, and a result holding circuit RLT. The RCT circuit RCTC operates on the basis of the clock signal CK4 from the serial-parallel converter SPC.

Flip-flop Fp, by delaying the n-bit data D[t] from the serial-parallel converter SPC by one clock period based on the clock signal CK4, to generate n-bit data D [t-1] of the previous clock period. The comparator CMP compares the n-bit data D[t-1] of the previous clock cycle with the n-bit data D[t] of the current clock cycle. When the two n-bit data D[t] and D[t-1] have the same value, the comparator CMP generates, in other words, asserts, the count-up signal CUPc, and when the two n-bit data are not the same value, the comparator CMP generates, in other words, asserts, the reset signal RSTc.

The counter CNc updates, for example, counts up, the count value CC in response to the count-up signal CUPc from the comparator CMP, and resets the count value CC in response to the reset signal RSTc from the comparator CMP. As a result, the count value CC represents the consecutive number when n-bit data D[t] of the same value occurs continuously.

Result holding circuit RLT has a maximum continuous number holding circuit LTmx, and a maximum continuous data holding circuit LTd. Maximum continuous number holding circuit LTmx holds the maximum count value CCmx when the count value CC from the counter CNc becomes maximum. The maximum continuous data holding circuit LTd holds n-bit data D[t-1] corresponding to the maximum count value CCmx as maximum continuous data Dmx.

Specifically, the result holding circuit RLT updates the maximum count value CCmx with the count value CC using the write enable signal WE when the count value CC from the counter CNc becomes larger than the maximum count value CCmx held in the maximum continuous number holding circuit LTmx for example. Further, the result holding circuit RLT uses the write enable signal WE to update the maximum continuous-time data Dmx with the n-bit data D[t-1] at the time of updating the maximum count value CCmx.

APT circuit APTC, in general, in the random number data DT from the random number generator RNG, detects the number of occurrences of each of 2ⁿ values represented by n-bit data D[t]. Specifically, the APT-circuit APTC includes a decoder DEC and 2ⁿ counters CN0 to CNi (i = 2ⁿ-1). The decoder DEC determines whether the n-bit data D[t] is 2ⁿ values and generates, in other words, asserts 2ⁿ count-up signals CUP0 to CUPi according to the judgement result. Counters CN0 to CNi, respectively, update the count value C₀ to Cᵢ representing the number of occurrences of each value according to the count-up signals CUP0 to CUPi, for example, to count up.

The result judging circuit JDG judges the pass P/fail F of the RCT on the basis of the maximum count value CCmx and the maximum continuous-time data Dmx held in the result holding circuit RLT in the RCT circuit RCTC. Further, the result judgement circuit JDG judges pass P or fail F of the APT based on the count values C₀ to Cᵢ from the counter CN0 to the CNi in the APT circuit APTC.

### <Test Method of Random Number Generator>

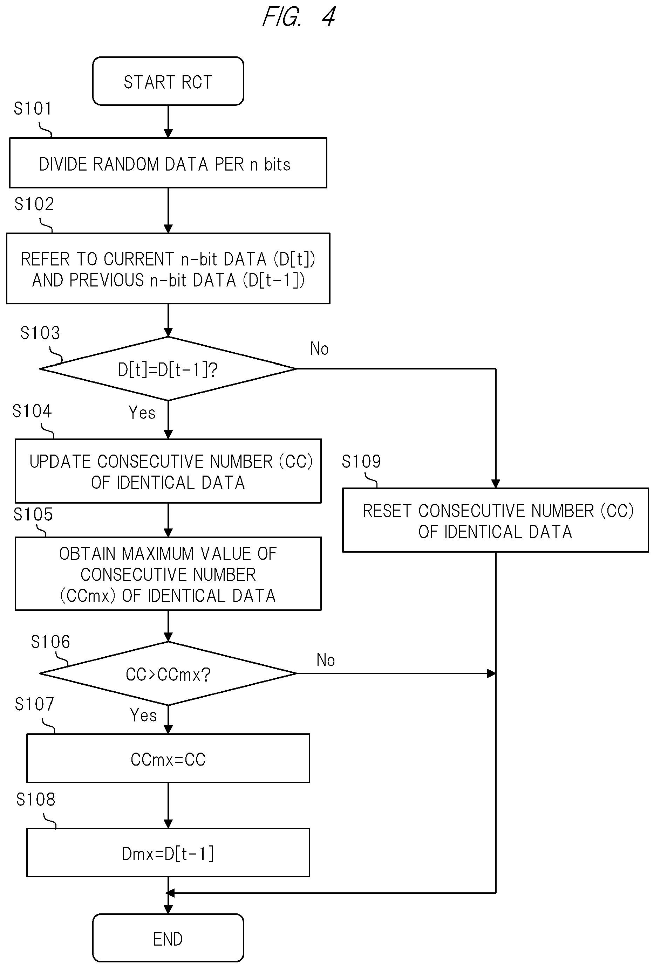

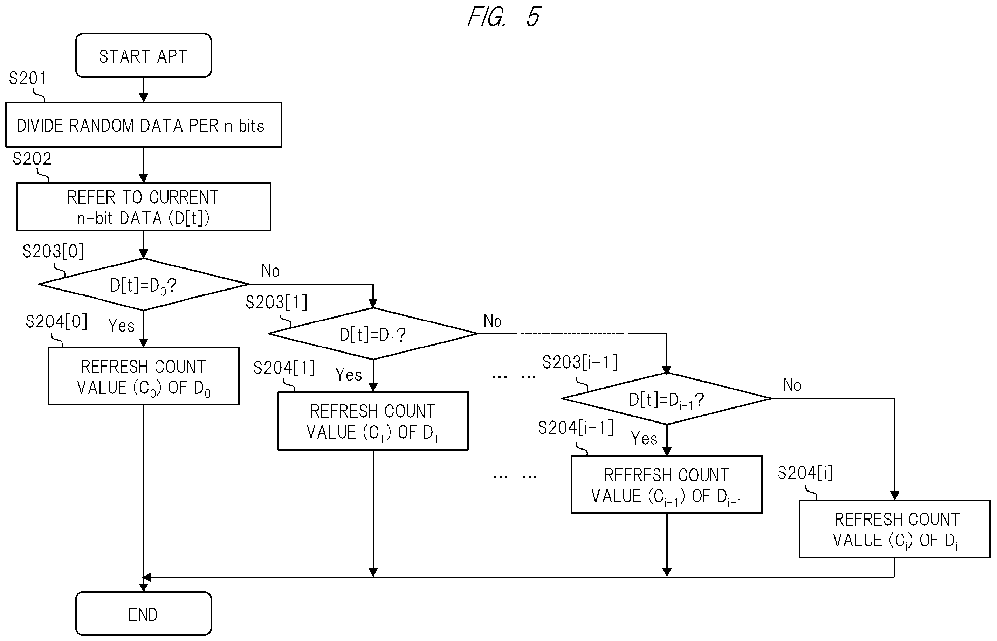

FIG. 4 is a flowchart showing an exemplary process content of a main part of the health test circuit in FIG. 1 when the health test circuit is set to "Repetition Count Test (RCT)". FIG. 5 is a flowchart showing an exemplary process content of a main part of the health test circuit in FIG. 1 when the health test circuit is set to "Adaptive Proportion Test". The flows of FIG. 4 and FIG. 5 may be performed, for example, by the processor PRC of FIG. 1. That is, the health test circuit HTC of FIG. 3 may be implemented in a program processing by the processor PRC.

In FIG. 4, the health test circuit HTC first separates the random number data DT from the random number generator RNG per n bits (step S101). Next, the health test circuit HTC refers to the n-bit data D[t] of the current cycle and the n-bit data D[t-1] of the previous cycle in step S102. Next, the health testing circuit HTC judges whether or not the n-bit data D[t] and the n-bit data D[t-1] are the same (step S103).

When D[t] = D[t-1] in the step S103, the health test circuit HTC updates the consecutive number of identical data, i.e., the count value CC in FIG. 3 (step S104). Thereafter, the health test circuit HTC acquires the maximum consecutive number of the same data, that is, the maximum count value CCmx in FIG. 3 (step S105). Then, the health test circuit HTC judges whether or not the count value CC at the step S104 is larger than the maximum count value CCmx at the step S105 (step S106).

When CC > CCmx in step S106, the health test circuit HTC updates the maximum count value CCmx with the count value CC (step S107), and updates the maximum continuous-time data Dmx with the corresponding n-bit data D[t-1] (step S108). On the other hand, when CC ≤ CCmx at the step S106, the health test circuit HTC ends the process. Further, when D[t] ≠ D[t-1] at the step S103, the health test circuit HTC resets the continuous number of the same data, i.e., the count value CC of FIG. 3, and terminates the process (step S109) . The health test circuit HTC repeatedly executes the flow of FIG. 4 as long as the random number data DT is generated.

In FIG. 5, the health test circuit HTC first separates the random number data DT from the random number generator RNG every n bits (step S201). Next, the health test circuit HTC refers to the n-bit data D[t] of the current cycle in step S202. The health test circuit HTC then judges whether the value of the n-bit data D[t] is D₀, D₁, ..., Dᵢ₋₁, Dᵢ (i = 2ⁿ-1 (step S203[0], S203 [1], ..., S203[i-1]).

The health study circuit HTC updates the corresponding number of occurrences, that is, the count value C₀, C₁, ..., Cᵢ₋₁, Cᵢ of FIG. 3, and terminates the process depending on whether the value of the n-bit data D[t] is D₀, D₁, ..., Dᵢ₋₁, Dᵢ (step S204[0], S204[1], ..., S204[i-1], S204[i]). The health test circuit HTC repeatedly executes the flow of FIG. 5 as long as the random number data DT is generated.

As described above, handling the random number data DT in n-bit units, unlike the conventional method described above, it is possible to verify the randomness with high accuracy, and it is possible to more reliably detect a decrease in randomness. As a specific example, when the unit bit length "n" is set to 4, the health test circuit HTC treats random number data of the above-described case A, case B, and case C as data columns of "0xAA...", "0x38E38E..." and "0x66...", respectively.

In this case, the maximum number of consecutive times of the same data serving as the study index in the RCT is one in case B, but is many times in cases A and C. As a result, in both cases A and C, since the maximum number of consecutive cases is large, it can be judged that the RCT fails. The maximum occurrence probability of the same data serving as the test index in the APT is 100% in case A and case C, and about 33% in case B. On the other hand, the baseline for maximal probability of occurrence is approximately 6% (= 1 per 2⁴). As a result, in case A, case B, and case C, since the maximum occurrence probability is largely dissociated from the reference value, it can be judged that the APT fails.

As described above, by handling the random number data DT in units of n bits, it is possible to verify the randomness with high accuracy particularly for random number data having a periodicity of a plurality of bits, such as a 2-bit period, a 4-bit period, and a 6-bit period, unlike the usual method of handling the random number data DT in units of 1 bit. At this time, the value of the unit bit length "n" can be arbitrarily set by the bit length setting signal NSET shown in FIG. 3.

### <Details of APT Judgement Method>

The result judgement circuit JDG of FIG. 3 can use, for example, the following two methods in judging the APT. In this example, the unit bit length "n" is 4. A first method is based on the number of occurrences of at least one value among the 16 (= 2⁴) values 0x0 to 0xF represented by the n-bit data D[t]. In this case, the result judgement circuit JDG judges in advance which of the 16 values is to be counted.

Then, the result judgement circuit JDG judges that the count value of the count target value does not exceed the predetermined reference value with respect to the random number data DT of 2048 bits or the like, as the pass P, and judges that the count value does not exceed the reference value as the fail F. Thus, it is possible to ensure that no fatal failure has occurred in the random number generator RNG. In the case of this first method, it is not always necessary to provide i+1 counter CN0 to CNi as shown in FIG. 3, and it is sufficient to provide at least one counter corresponding to the value to be counted.

A second method is a judgement method in which minimum entropy is taken into consideration, and is a method in which the number of occurrences of each of the 16 values represented by the n-bit data D[t] is all detected. In this case, the result judgement circuit JDG, for example, for a random number data DT such as 2048 bits, the count value of any value in the 16 values 0x0 to 0xF also pass P if it does not exceed the reference value, if the count value exceeding the reference value is one, it is judged that the fail F.

This makes it possible to ensure that the quality, i.e. the randomness, of the random number data DT generated by the random number generator RNG meets a certain level, in addition to the fact that no fatal failure has occurred in the random number generator RNG. As a result, for example, it is possible to obtain resistance to attacks that reduce randomness. The result judgement circuit JDG may calculate, for example, the sum of 16 count values and compare it with the number of bits of the random number data DT used in the test. This makes it possible to obtain resistance to attacks such as tampering with the number of the random number data DT.

### <Various modifications of the health test circuit>

As a modification of FIG. 3, the RCT circuit RCTC and the APT circuit APTC may be configured to individually set the values of the unit-bit length "n". In this instance, two serial/parallel converters SPC may be provided for the RCT circuit RCTC and the APT circuit APTC. Further, a plurality of the health test circuit HTC of FIG. 3 may be provided, and a value of a unit bit length **"n"** different from each other may be set to each of the health test circuits HTC. In this case, one of the plurality of health test circuits HTC may be set to n=1. That is, the configuration may be such that the health test circuit HTC of FIG. 3 is added to the health test circuit of the comparative example.

When such various modified examples are used, it is possible to determine an optimum configuration for each system to be applied in consideration of the balance between the detection performance of the health test, the security and confidentiality of the encryption, and the cost such as the circuit scale or the program size.

### <Major Effects of First Embodiment>

As described above, by using the method of the first embodiment, it is possible to prevent erroneous judgement of data having periodicity as a random number, and it is possible to verify the randomness of the random number data with high accuracy. In other words, it is possible to reliably detect that the randomness has deteriorated. As a result, the security and confidentiality of cryptography can be enhanced. In addition, resistance to attacks that reduce randomness can be obtained.

### Second Embodiment

### <Details of the Random Number Generator>

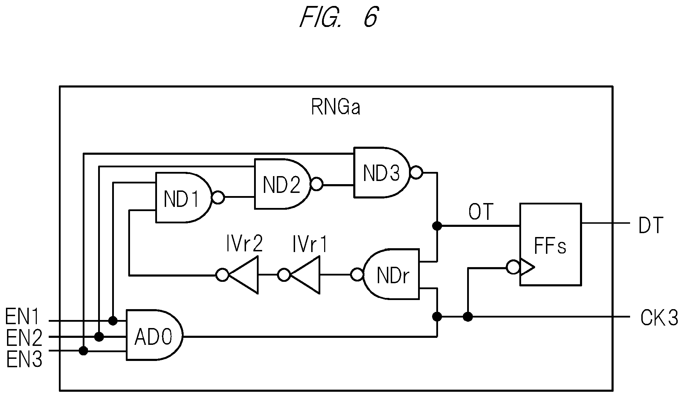

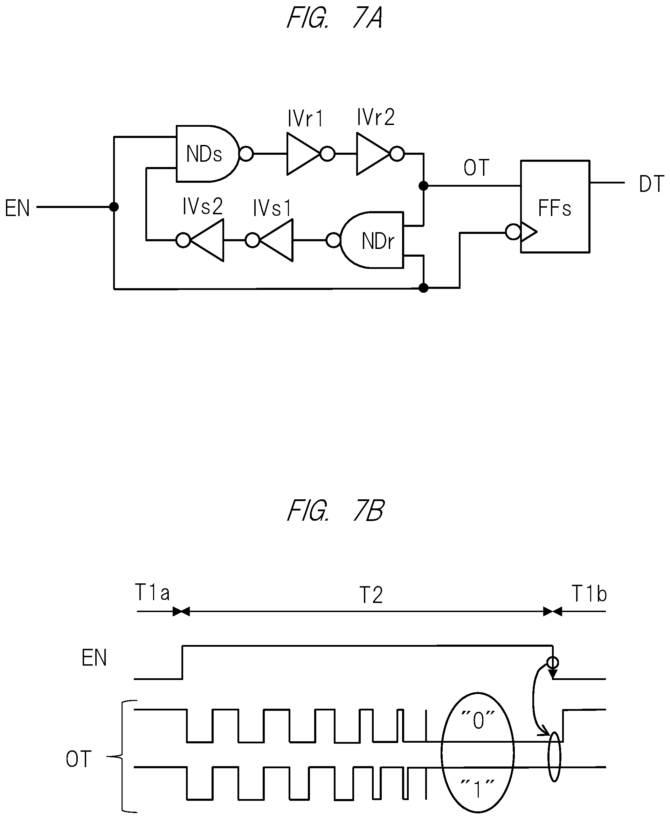

FIG. 6 is a semiconductor device according to the second embodiment of the present invention is a circuit diagram showing a configuration example of a random number generator in FIG. 1. FIG. 7A and FIG. 7B are diagrams illustrating the operating principles of the random number generator of FIG. 6. FIG. 7A shows an exemplary circuit configuration of a random number generator called a TERO(Transition Effect Ring Oscillator type circuit. FIG. 7B shows an exemplary operation of FIG. 7A. A random number generator RNGa shown in FIG. 6 will be described in detail later, it is configured to be switched characteristics of randomness in response to the enable signal EN1 to EN3 serving as a characteristic setting signal.

First, in FIG. 7A, two logical gates made of NAND gates NDs, NDr constitute an SR-latch. In each of the NAND gates NDs, NDr, one of the two inputs, the enable signal EN is commonly input. Further, the other of the two inputs in the NAND gate NDs, the output signal of the NAND gate NDr is fed back through the inverter-circuits IVs1, IVs2. Similarly, on the other hand of the two inputs in the NAND gate NDr, the output signal of the NAND gate NDs is fed back through the inverter-circuits IVr1, IVr2.

In such an SR latch, the state in which the enable signal EN is "0" is in the prohibited state, and the state in which the enable signal EN is "1" is in the latched state. In FIG. 7B, the operation waveform of the period T1a,T1b of the inhibited state, and the operation waveform of the period T2 of the latched state is shown. In the disabled state, the output signal of the NAND gates NDs, NDr is both fixed to "1", and the other of the two inputs in the NAND gates NDs, NDr is also fixed to "1". Consequently, as shown in the term T1a,T1b of FIG. 7B, for example, the output signal OT of the inverter-circuit IVr2 is fixed to "1".

Here, in the SR latch, if the transition from the prohibited state to the latch state without going through the set input/reset input, oscillation occurs. If there is no variation in the circuit characteristics and the propagation delay time from the NAND gate NDr to the NAND gate NDs and the propagation delay time in the reverse direction are the same, this oscillation continues infinitely. On the other hand, for example, a variation in the two propagation delay times results in a set input or reset input, and the SR latch converges to a latched state of the set or reset. Therefore, as shown in the period T2 in FIG. 7B, the output-signal OT, after undergoing oscillation of a certain period, converges to "0" or "1" .

Thereafter, when the enable signal EN falls from "1" to "0", the SR latch transitions from the latched state of the set or reset to the prohibited state again. The flip-flop FFs of FIG. 7A, as shown in the period T2 and period T1b of FIG. 7B, at the falling edge of the enable signal EN, by latching the output signal OT of 0 or 1 associated with the latching state of the set or reset, and outputs a random number data DT. That is, by the enable signal EN as a clock signal, for each of its falling edges, "0" or "1" is latched randomly, thereby making it possible to generate a random number data DT.

Random number generator RNGa shown in FIG. 6 includes four NAND gates ND1 to ND3, NDr, an AND gate AD0, two inverter-circuits IVr1, IVr2, and a flip-flop FFs. Of these, the NAND gate NDr, two inverter-circuit IVr1, IVr2 and flip-flop FFs are the same as in the FIG 7A.

The AND gate AD0 generates a clock signal CK3 by performing an AND operation with three enable signal EN1 to EN3 as inputs. One of the two inputs in the NAND gate NDr, the flip-flop FFs, instead of the enable signal EN shown in FIG. 7A, this clock signal CK3 is input. Further, the other of the two inputs in the NAND gate NDr, the output signal OT of the NAND gate ND3 is input.

One of the two inputs in the NAND gates ND1 to ND3, respectively, enable signals EN1 to EN3 are input. In addition, the NAND gates ND1 to ND3 is cascaded with the NAND gate ND1 as the first stage and the NAND gate ND3 as the last stage. Along with this, the other of the two inputs in the NAND gate ND1 to ND3, the output signal from the front stage is input. At this time, the other of the two inputs in the first stage of the NAND gate ND1, the output signal of the inverter-circuit IVr2 is input.

Thus, depending on the setting status of the enable signals EN1 to EN3 serving as the characteristic setting signal, any one of the NAND gates ND1 to ND3 functions as the NAND gate NDs shown in FIG. 7A, and the remainder functions as an inverter circuit. Specifically, those corresponding to the NAND gate NDs, when the enable signal EN1,EN2 is both fixed to "1" (referred to as case (1)) is a NAND gate ND3. Further, those corresponding to the NAND gate NDs, when the enable signal EN2, EN3 is both fixed to "1" (referred to as case (2)) is a NAND gate ND1, when the enable signal EN1, EN3 is both fixed to "1" (referred to as case (3)) is a NAND gate ND2.

On the other hand, in the case (1), the remaining NAND gates ND1, ND2 functions as an inverter-circuit. Consequently, the 4-stage inverter circuit is passed from the output of the NAND gate NDr to the input of the NAND gate ND3, and the 0-stage inverter circuit is passed from the output of the NAND gate ND3 to the input of the NAND gate NDr.

Similarly, in the case (2), the two-stage inverter circuitry is used for both the NAND gate NDr to the NAND gate ND1 and vice versa. This is equivalent to the configuration of FIG. 7A shown in the drawing. Furthermore, in the case (3), it will be through the inverter circuit of three stages from the NAND gate NDr to the NAND gate ND2, will be through the inverter circuit of one stage from the NAND gate ND2 to the NAND gate NDr.

Here, referring to the case (2), when defining the remaining one of the enable signal EN1 except for "1" fixed to the clock signal, and the AND gate AD0 outputs the clock signal as a clock signal CK3. As a result, the same operation as in the illustrated in FIG. 7B is performed. The same applies to the case (1) and the case (3), and the remaining one enable signal except for the "1" fixation is defined as the clock signal.

At this time, the configuration example of FIG. 6, unlike the configuration example of FIG. 7A, as described above, has a configuration in which the two-way propagation delay time between the NAND gates NDs, NDr constituting the SR-latch can be variably set in accordance with the setting state of the enable signals EN1 to EN3. By varying the two-way propagation delay times, the properties of randomness in the random number generator RNGa can be switched.

### <Details of the Health Test Circuit>

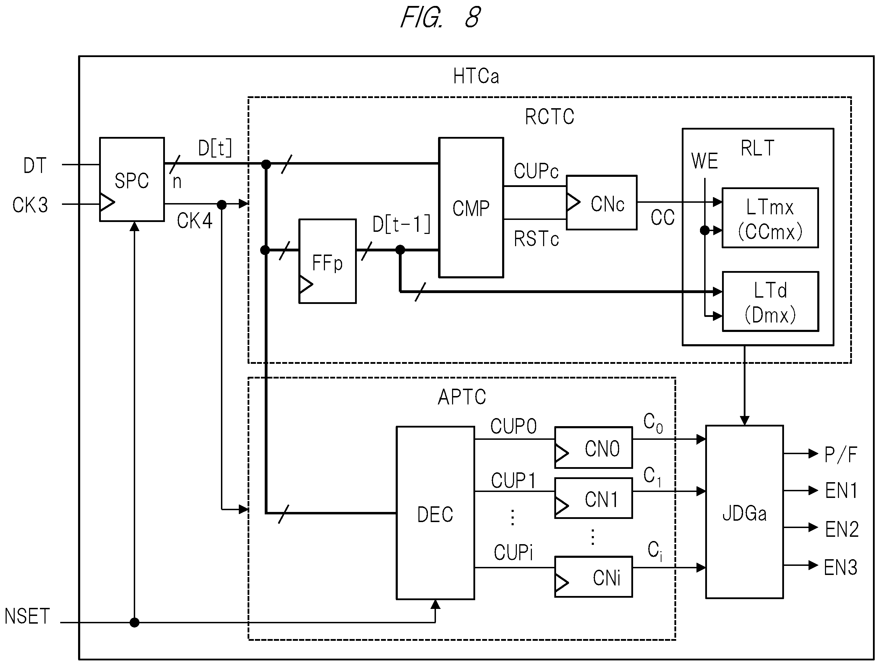

FIG. 8 is a semiconductor device according to the second embodiment of the present invention is a circuit block diagram showing a configuration example of a health test circuit in FIG 1. The health test circuit HTCa shown in FIG. 8, as compared with the configuration example of FIG. 3, the configuration and operation of the result judgement circuit JDGa are different. As in FIG. 3, the result judgement circuit JDGa of FIG. 8 verifies randomness based on the maximum count value CCmx and the maximum continuous-time data Dmx held in the result holding circuit RLT, and the count value C₀ to Cᵢ from the counters CN0 to CNi, and judges the pass P/fail F.

Furthermore, the result judgement circuit JDGa, unlike the case of FIG. 3, when the verification result of the randomness does not satisfy the predetermined criteria, switching the characteristics of the randomness in the random number generator RNGa using the enable signal EN1 to EN3 serving as a characteristic setting signal. Specifically, each time the judgement result (in other words, the verification result) becomes a fail F, the result judgement circuit JDGa switches the setting status of the enable signals described in FIG. 6, that is, the cases (1) to (3) in order. Thus, the property of randomness in the random number generator RNGa shown in FIG. 6 is changed, the judgement result is likely to be switched so that the pass P.

### <Major Effects of Second Embodiment>

As described above, by using the method of the second embodiment, the same effects as the various effects described in the first embodiment can be obtained. Further, when the method of the second embodiment is used, it is possible to detect that the randomness has deteriorated, and in addition, it is possible to perform control so as to change the characteristic of the randomness in accordance with the detection. As a result, for example, the availability of the random number generator can be increased.

## Claims

1. A semiconductor device comprising:
a random number generator (RNG) that generates random number data (DT) which is serial data; and
a health test circuit (HTC) for verifying a randomness of the random number data (DT),
wherein the health test circuit (HTC) treats the random number data (DT) as a data string of n-bit data by dividing the random number data (DT) per n bits and verifies the randomness based on the n-bit data,
wherein n is an integer larger than or equal to two,
**characterised in that**
the random number generator (RNG) is configured to be able to switch characteristics of the randomness in response to a characteristic setting signal,
wherein the health test circuit (HTC) switches the characteristics of the randomness in the random number generator (RNG) using the characteristic setting signal when the verification result of the randomness based on the n-bit data does not satisfy a predetermined criterion,
wherein the random number generator (RNG) is provided with two logic gates (NDs, NDr) constituting an SR latch and one or more further logic gates to be able to variably set bidirectional propagation delay time in accordance with the characteristic setting signal mutually between the two logic gates (NDs, NDr).

2. The semiconductor device according to claim 1,
wherein the health test circuit (HTC) sets a value of the n-bit data in response to a bit length setting signal.

3. The semiconductor device according to claim 1 or 2,
wherein the health test circuit (HTC) includes a first test circuit (RCTC) for detecting a continuous number when the n-bit data having the same value is generated continuously.

4. The semiconductor device according to any one of claims 1 to 3,
wherein the health test circuit (HTC) includes a second test circuit (APTC) for detecting a number of occurrences of at least one value among 2ⁿ values represented by the n-bit data.

5. The semiconductor device according to claim 4,
wherein the second test circuit (APTC) detects all occurrences of each of the 2ⁿ values.

6. The semiconductor device according to claim 4
wherein the health test circuit (HTC) calculates a sum of the number of occurrences of each of the 2ⁿ values detected by the second test circuit (APTC).

## Patentansprüche

1. Halbleitervorrichtung, umfassend:
einen Zufallszahlengenerator (RNG), der Zufallszahlendaten (DT) erzeugt, die serielle Daten sind; und
eine Gesundheitstestschaltung (HTC) zum Verifizieren einer Zufälligkeit der Zufallszahlendaten (DT),
wobei die Gesundheitstestschaltung (HTC) die Zufallszahlendaten (DT) als eine Datenzeichenfolge von n-Bit-Daten behandelt, indem sie die Zufallszahlendaten (DT) durch n Bits teilt und die Zufälligkeit basierend auf den n-Bit-Daten verifiziert,
wobei n eine ganze Zahl größer als oder gleich zwei ist,
**dadurch gekennzeichnet, dass**
der Zufallszahlengenerator (RNG) so konfiguriert ist, dass er in der Lage ist, die Eigenschaften der Zufälligkeit in Reaktion auf ein charakteristisches Einstellsignal umzuschalten,
wobei die Gesundheitstestschaltung (HTC) die Eigenschaften der Zufälligkeit im Zufallszahlengenerator (RNG) unter Verwendung des charakteristischen Einstellsignals umschaltet, wenn das Verifizierungsergebnis der Zufälligkeit basierend auf den n-Bit-Daten ein vorbestimmtes Kriterium nicht erfüllt,
wobei der Zufallszahlengenerator (RNG) mit zwei Logikgattern (NDs, NDr) versehen ist, die ein SR-Latch bilden, und einem oder mehreren weiteren Logikgattern, um in der Lage zu sein, eine bidirektionale Laufzeitverzögerungszeit gemäß dem charakteristischen Einstellsignal wechselseitig zwischen den zwei Logikgattern (NDs, NDr) variabel einzustellen.

2. Halbleitervorrichtung nach Anspruch 1,
wobei die Gesundheitstestschaltung (HTC) einen Wert der n-Bit-Daten in Reaktion auf ein Bitlängen-Einstellsignal einstellt.

3. Halbleitervorrichtung nach Anspruch 1 oder 2,
wobei die Gesundheitstestschaltung (HTC) eine erste Testschaltung (RCTC) zum Erfassen einer kontinuierlichen Zahl enthält, wenn die n-Bit-Daten mit demselben Wert kontinuierlich erzeugt werden.

4. Halbleitervorrichtung nach einem der Ansprüche 1 bis 3,
wobei die Gesundheitstestschaltung (HTC) eine zweite Testschaltung (APTC) zum Erfassen einer Anzahl von Vorkommen von wenigstens einem Wert unter durch die n-Bit-Daten dargestellten 2ⁿ Werten enthält.

5. Halbleiterbaurichtung nach Anspruch 4,
wobei die zweite Testschaltung (APTC) alle Vorkommen von jedem der 2ⁿ Werte erfasst.

6. Halbleiterbauelement nach Anspruch 4,
wobei die Gesundheitstestschaltung (HTC) eine Summe der Anzahl von Vorkommen von jedem der durch die zweite Testschaltung (APTC) erfassten 2ⁿ Werte berechnet.

## Revendications

1. Un dispositif semi-conducteur comprenant :
un générateur de nombres aléatoires (RNG), qui génère des données de nombres aléatoires (DT) qui sont des données série ; et
un circuit de test de conformité (HTC), pour vérifier le caractère aléatoire des données de nombres aléatoires (DT),
le circuit de test de conformité (HTC) traitant les données de nombres aléatoires (DT) comme une chaîne de données de n bits en divisant les données de nombres aléatoires (DT) par n bits et vérifiant le caractère aléatoire sur la base des données de n bits,
n étant un nombre entier supérieur ou égal à deux,
**caractérisé en ce que**
le générateur de nombres aléatoires (RNG) est configuré de façon à être apte à commuter les caractéristiques du caractère aléatoire en réponse à un signal de réglage de caractéristique,
le circuit de test de conformité (HTC) commutant les caractéristiques du caractère aléatoire dans le générateur de nombres aléatoires (RNG) en utilisant le signal de réglage de caractéristique lorsque le résultat de la vérification du caractère aléatoire sur la base des données à n bits ne satisfait pas à un critère prédéterminé,
le générateur de nombres aléatoires (RNG) étant muni de deux portes logiques (NDs, NDr) constituant un verrou SR et d'une ou plusieurs autres portes logiques pour être apte à régler de manière variable le temps de retard de propagation bidirectionnel en fonction du signal de réglage des caractéristiques entre les deux portes logiques (NDs, NDr).

2. Le dispositif semi-conducteur selon la revendication 1,
dans lequel le circuit de test de conformité (HTC) définit une valeur des données à n bits en réponse à un signal de réglage de longueur de bits.

3. Le dispositif semi-conducteur selon la revendication 1 ou la revendication 2,
dans lequel le circuit de test de conformité (HTC) comprend un premier circuit de test (RCTC) pour détecter un nombre continu lorsque les données à n bits ayant la même valeur sont générées en continu.

4. Le dispositif semi-conducteur selon l'une quelconque des revendications 1 à 3,
dans lequel le circuit de test de conformité (HTC) comprend un deuxième circuit de test (APTC) pour détecter un nombre d'occurrences d'au moins une valeur parmi 2ⁿ valeurs représentées par les données à n bits.

5. Le dispositif semi-conducteur selon la revendication 4,
dans lequel le deuxième circuit de test (APTC) détecte toutes les occurrences de chacune des 2ⁿ valeurs.

6. Le dispositif semi-conducteur selon la revendication 4,
dans lequel le circuit de test de conformité (HTC) calcule une somme du nombre d'occurrences de chacune des 2ⁿ valeurs détectées par le deuxième circuit de test (APTC).
